Europäisches Patentamt

European Patent Office

Office européen des brevets

(11) Veröffentlichungsnummer: **0 329 916**

A1

# EUROPÄISCHE PATENTANMELDUNG

(21) Anmeldenummer: 88730040.8

(22) Anmeldetag: 20.02.88

(51) Int. Cl.⁴: **F26B 5/04** , **F26B 17/00** , **C02F 11/12**

(43) Veröffentlichungstag der Anmeldung:
30.08.89 Patentblatt 89/35

(84) Benannte Vertragsstaaten:
ES GR

(71) Anmelder: **Prehm, Yorck-Uwe, Dipl.-Ing.**
**Ansgariusweg 16 D**
**D-2000 Wedel/Holstein(DE)**

(72) Erfinder: **Prehm, Yorck-Uwe, Dipl.-Ing.**
**Ansgariusweg 16 D**
**D-2000 Wedel/Holstein(DE)**

(74) Vertreter: **Patentanwälte Wenzel & Kalkoff**
**Grubes Allee 26 Postfach 730466**
**D-2000 Hamburg 73(DE)**

(54) **Verfahren und Vorrichtung zur Entwässerung von Nassgut, insbesondere von wasserhaltigen fliess- und/oder schüttfähigen Massengütern.**

(57) Um körniges Material oder Teilchen enthaltende Naßgüter schnell, wirtschaftlich und energiesparend maschinentechnisch bis zur Pulvertrockenheit zu entwässern, werden Feststoffteilchen in wenigstens einer Trocknungsstufe dynamisch verteilt und von dem sich verteilenden und/oder verteilten Material Feuchtigkeit unter ständiger Beaufschlagung mit einem angepaßten Vakuum abgetrennt und abgezogen. Zu diesem Zweck umfaßt eine Vorrichtung wenigstens eine eine Entspannungstrocknung ausführende, Feststoffteilchen in einem Behälter (31, 51, 61) od.dgl. dynamisch entzerrende, verteilende und fördernde, Vakuum erzeugende und durch dieses Feuchtigkeit abtrennende und abführende Einrichtung oder Stufe (3, 5, 6).

Fig. 1

EP 0 329 916 A1

## Verfahren und Vorrichtung zur Entwässerung von Naßgut, insbesondere von wasserhaltigen fließ- und/oder schüttfähigen Massengütern

Die Erfindung betrifft ein Verfahren zur Entwässerung von Naßgut, insbesondere von wasserhaltigen fließ-und/oder schüttfähigen Massengütern wie Schlämmen, Fäkalien, schlammartigen Ablagerungen wie Schlick, Schüttgütern wie Getreide, und eine Vorrichtung zur Durchführung des Verfahrens.

Bei Naßbaggerungen zur Erhaltung von schiffbaren Wassertiefen in Häfen, Flüssen, Seen und Fahrrinnen fallen jährlich mehrere Millionen Kubikmeter feuchter Sand, Schlämme und/oder Schlick an. Das Baggergut ist wegen Belastung mit Schad- und Giftstoffen, insbesondere Blei, Quecksilber, Kadmium, Zink und Kupfer zu einer ernsthaften Bedrohung für Menschen und Umwelt geworden. Die Unterbringung, Behandlung oder anderweitige Verwendung ist mit einer Reihe von Problemen verbunden. Insbesondere bereitet das Deponieren von ausgebaggertem Hafen- und Flußschlick von Jahr zu Jahr größere Probleme, da Schlick zunehmend mit giftigen Stoffen belastet ist, durch Bagger- und Spülvorgang in Spülfelder gelangendes Material stark wasserhaltig ist, große, nicht in ausreichendem Maß zur Verfügung stehende Spülfeldkapazitäten benötigt werden und die Trocknungs- und Konsolidierungszeiten sehr lang sind. Aufgeschlickte Flächen werden erst nach jahrelanger intensiver Entwässerung wieder für eine Bebauung nutzbar. Die Belastung des Schlicks mit Schadstoffen führt zur Verseuchung von Grundwasser. Auch Transport und Verklappung von Baggergut in die hohe See oder Rückführung von Schlamm oder Schlick in die natürliche Sedimentfracht eines Flusses sind mit ökologischen Problemen sowie mit Transport- und Entladungsproblemen verbunden. Da also die Lagerung und Entwässerung von Schlamm bzw. Schlick in Spülfeldern infolge des Flächenaufwandes sowie der Umweltbelastung oder die Verklappung bereits heute und jedenfalls in der Zukunft nicht mehr möglich und vertretbar sind, müssen andere Maßnahmen zur Schlamm-/Schlickunterbringung, Aufbereitung und/oder Beseitigung gefunden werden.

Bei einem bekannten Verfahren (DE-OS 29 02 323) und zugehöriger Vorrichtung zur Entwässerung von Naßgut mit direkter Trocknung und dynamischer Verteilung von Feststoffteilchen erfolgt eine Erwärmung von Feuchtigkeit enthaltenden Feststoffpartikeln durch direkten Wärmeaustausch innerhalb eines Wirbelbetts und mit einem energetisch quer angeschlossenen geschlossenen Verfahren zum thermischen Behandeln. Eine thermische Behandlungsanlage umfaßt Brenner und Brennkammer eines Boilers, um Wärmeenergie zu erzeugen und den direkten Wärmeaustausch durchzuführen.

Dieser sowie die anschließende Wärmebehandlung ergeben ein relativ umfangreiches und kostenaufwendiges Verfahren bzw. eine entsprechend aufwendige Vorrichtung. Der Behandlungsvorgang ist praktisch nur auf die Trocknung von solchen Feststoffpartikeln anwendbar, die bereits einen relativ niedrigen Feuchtigkeitsgehalt haben. Eine Schleuse ist vorgesehen, um zu verhindern, daß sich Luftsauerstoff mit Abdampf vermischt, so daß nur eine diskontinuierliche Beschickung der Anlage bzw. nur ein diskontinuierlicher Austrag möglich ist.

Ein anderes Trocknungs-/Wärmebehandlungsverfahren bzw. eine dafür vorgesehene Vorrichtung (DE-OS 34 35 094) beruhen auf einer indirekten Trocknung durch Wärmebehandlung feuchter Feststoffe. Zur Erzeugung der Wärmeenergie ist eine relativ aufwendige Anlage erforderlich. Für den indirekten Wärmeaustausch muß zusätzlich Unterdruck als Hilfsaggregat vorgesehen und aufgebaut werden, um durch Sauerstoffentzug die Bildung eines explosiven Sauerstoff-Luftgemisches zu verhindern und eine Zerstörung der Anlage oder eine Gefährdung von Menschenleben zu vermeiden.

Auch ist es bekannt, Schlick oder Klärschlämme in Hydrozyklonen, mit Zentrifugen, in Filterverfahren und/oder durch Zusatz von Flockungsmitteln zu behandeln und aufzubereiten. Bei diesen Verfahren erhält man als Endprodukt stets einen feuchten Kuchen, und es fällt verunreinigtes Wasser an. Das Material muß dann durch Erwärmung oder Anlage von Sonderdeponien weiter getrocknet werden. Insbesondere ist es bekannt (DE-OS 34 42 403), teilweise entwässerten Klärschlamm mit einem organische Bestandteile enthaltenden Trokkenprodukt zu mischen und die erhaltene Masse mit erwärmter Luft zu trocknen und anschließend in einer luftdicht abgeschlossenen Entgasungszone bei Temperaturen bis 380° C einer Trockendestillation zu unterwerfen. Bei einem weiteren Verfahren (DE-OS 31 37 227) zum Veraschen von entwässertem Schlamm wird teilweise entwässerter Schlamm pelletiert, und die Pellets werden trocken destilliert. Bei einem bekannten Verfahren zur Trocknung von vorentwässerten Klärschlämmen (DE-OS 32 24 362) werden das Material gerührt, gewalkt und/oder geknetet, die Produkttemperatur etwa auf den Siedepunkt des Gemisches erhöht, erhaltene Brüden kondensiert und erhaltene Trockensubstanz zur Gewinnung von Prozeßwärme für die Erhöhung der Produkttemperatur verbrannt. Es gibt jedoch bis heute kein wirtschaftlich arbeitendes oder zufriedenstellendes Verfahren, mit dem insbesondere Naßbaggergut und/oder auf Deponien liegende nasse Klärschlämme in großen Mengen schnell, wirtschaftlich und vollständig getrocknet werden können. Dies bedeutet, daß die Deponien bisher nur bedingt über längere Zeiträume abgebaut werden können, wobei die Kapazität von Spülfeldern jedoch nicht mehr ausreichend ist, neue Spülfelder zu landschaftlichen Eingriffen und die Schadstoffbelastung von Schlämmen und Schlick zu erheblichen Umweltbelastungen führen. Bei der Suche nach Möglichkeiten, Schlämme und Schlick unterzubringen oder aufzubereiten, muß die Umwelt, soweit es irgendwie geht, geschont werden, und die Kosten müssen so niedrig wie möglich bleiben. Zum Erreichen dieses Ziels sind staatliche Förderungsmittel zur Verfügung gestellt und Forschungsaufträge vergeben worden, ohne daß es bisher auf befriedigende Weise gelungen ist, Naßgut in großen Mengen maschinentechnisch ausreichend zu entwässern.

Der Erfindung liegt die Aufgabe zugrunde, Naßgut besonders energiesparend und in einem Höchstmaß umweltfreundlich zu behandeln und dabei einen Trocknungsvorgang zu schaffen, mit dem insbesondere stark wasserhaltige Güter in großen Massen bei kontinuierlicher Beschickung und Betriebsweise in kurzer Zeit getrocknet werden können, wobei gewährleistet sein soll, daß das Endprodukt staubartig trocken erhältlich ist und das Verfahren relativ einfach und damit besonders kostengünstig betreibbar bzw. die dafür erforderliche Vorrichtung relativ einfach bauend ist.

Die Aufgabe wird bei dem eingangs genannten Verfahren erfindungsgemäß dadurch gelöst, daß das sich verteilende und/oder verteilte Feststoffteilchenmaterial kontinuierlich gefördert und ständig mit einem dem Verteilungszustand, dem Feuchtigkeitsgrad und/oder der Fördermenge angepaßten Vakuum (Unterdruck) beaufschlagt wird, wobei allein mit dem Vakuum unter Ausbildung einer Entspannungstrocknung Feuchtigkeit abgetrennt und abgezogen wird und die Entspannungstrocknung bis zur Pulvertrockenheit der Feststoffteilchen aufrechterhalten wird, und daß das pulvertrockene Material kontinuierlich ausgetragen wird.

Bei einer Vorrichtung zur Durchführung des Verfahrens mit einer Beschickungseinrichtung wie einem Aufgabetrich ter und mit einer der Trockengutentnahme dienenden Austragseinrichtung, die über Fördereinrichtungen mit einer Feststoffteilchen des zu entwässernden Materials dynamisch entzerrenden und/oder verteilenden Verteilungseinrichtung in Verbindung stehen, ist erfindungsgemäß vorgesehen, daß die Verteilungseinrichtung mindestens einen Behälter, eine Kammer, eine Röhre od.dgl. sowie eine Einrichtung zur Förderung des verteilten Feststoffmaterials umfaßt und daß die Verteilungs-/Fördereinrichtung mindestens eine Stufe mit einer Vakuumeinrichtung zur Entspannungstrocknung aufweist. Naßgut, insbesondere stark wasserhaltige fließ- und/oder schüttfähige Massengüter wie Schlick und/oder Schlämme werden energiesparend, in großen Mengen, kontinuierlich und in kurzer Zeit zu einem staubartig trockenen, insbesondere geruchlosen Produkt aufbereitet, wobei das abgezogene Wasser frei von anorganischen Stoffen erhalten werden, insbesondere Trinkwasserqualität aufweisen kann und das Trockenprodukt - z.B. durch Verbrennung - leicht beseitigbar und/oder weiter verarbeitbar ist. Die Trocknung bis zur Pulvertrockenheit wird ohne Erhitzung des Wasserfeststoffgemisches ausschließlich durch Vakuum erreicht. Verfahrenstechnische bzw. bautechnische Vereinfachung ergibt sich insbesondere dadurch, daß keine Vorerwärmung des zu trocknenden Mediums erforderlich ist. Es ist ein großtechnisch anwendbares Verfahren und eine dafür vorgesehene kompaktbauende, wirtschaftlich und mit hohen Durchsätzen betreibbare Anlage oder Vorrichtung erreicht, wobei insbesondere hinsichtlich der Behandlung bzw. Beseitigung von Fluß-, Hafen- und/oder Seeschlämmen und/oder Schlick eine gesundheitsschädliche, landschaftszerstörende, umweltbedrohende und flächenaufwendige Deponierung entfällt. Naßgebaggertes Gut, insbesondere auch ein Gemisch aus Sand und Schlick, kann unmittelbar dem Verfahren zugeführt werden, und, da keine Trocknungsflächen mehr erforderlich sind, auch wetterun abhängig, sofort und in kurzer Zeit bis zu einem pulverartig staubtrockenen Material aufbereitet werden, das in komprimierter Form mit geringen Kosten transportiert, verbrannt, als Trockengut klassiert und/oder, insbesondere in Form von Zuschlagstoffen für Baustoffe oder -materialien, z.B. für Fliesen, Bausteine, Keramikplatten od. dgl. oder als Düngemittel, weiter verarbeitet bzw. verwendet werden kann. Das aufwendige Herrichten von Trocknungsflächen, Umpumpen und Sichern von Lagerflächen entfällt, und Schadstoffe können nicht mehr in den Untergrund eindringen. Das erfindungsgemäße Verfahren bzw. die erfindungsgemäße Vorrichtung gewährleisten eine ökonomisch und ökologisch besonders günstige Behandlung und/oder Verwertung von Schlämmen und/oder Schlick und sind betriebstechnisch kontinuierlich betreibbar und relativ einfach ausführbar, wobei z.B. chemische Zusätze und/oder Mischungen mit anderen Stoffen vermieden sind. Das Verfahren bzw. die Vorrichtung sind aber darüber hinaus ganz allgemein geeignet, massenhaft anfallende, körniges Material oder Teilchen enthaltende Naß- und/oder Flüssigkeitsgüter jeglicher Art, insbesondere auch in Form von Mischgut mit Bestandteilen verschiedener Korngrößen, z.B. Kohleschlämme, Bohrschlämme, Fäkalien und feuchte Getreide, bis zur Pulvertrockenheit zu entwässern.

Mit dem erfindungsgemäßen Verfahren lassen sich besonders große Mengen Naßgut, insbesondere in der Größenordnung von 500 m³/h, trocknen. Der Durchsatz kann auf besonders einfache Weise weiter dadurch gesteigert werden, daß Entspannungstrocknungen in nebeneinander geschalteten Trocknungsstufen erfolgen.

Hinsichtlich einer besonders großen Verfahrensgeschwindigkeit ist es zweckmäßig, daß Entspannungstrocknungen in hintereinander geschalteten Trocknungsstufen erfol gen. Dabei ist es für die kontinuierliche Verfahrensdurchführung und/oder für einen besonders wirtschaftlichen energiesparenden Ablauf des Verfahrens besonders vorteilhaft, daß der den Entvakuisierungsgrad bestimmende Arbeitsdruck jeder in Förderrichtung nachgeschalteten Stufe kleiner als in der vorhergehenden Stufe erzeugt wird. Damit wird insbesondere auch die Gesamtspannungsenttrocknung besonders zuverlässig ausgebildet und aufrechterhalten. Ein sehr günstiger Verfahrensablauf ergibt sich insbesondere dadurch, daß die Entspannungstrocknungen in drei aufeinanderfolgenden Stufen durchgeführt werden, wobei der Arbeitsdruck des Vakuums insbesondere 20 - 30 mbar in der ersten Stufe, 10 - 20 mbar in der zweiten Stufe und 5 - 10 mbar in der dritten Stufe beträgt. Eine besonders wirtschaftliche Arbeitsweise bzw. große Wirksamkeit des Verfahrens werden auf besonders zweckmäßige Weise auch dadurch erreicht, daß die Verteilung in der zweiten Trocknungsstufe derart erfolgt, daß der Verteilungsgrad im Vergleich zu den Verteilungsgraden in übrigen Trocknungsstufen besonders groß ist, wobei die Teilchen ständig, insbesondere durch Verwirbelung, desagglomeriert und aufgelokkert, also entzerrt, gedreht und bewegt werden. Dabei können die Desagglomeration und Auflockerung sowie insbesondere eine damit verbundene Oberflächenverteilung von Feststoffteilchen besonders ausgeprägt dadurch erreicht werden, daß das Material nach wenigstens einer Entspannungstrocknung, vorzugsweise nach der ersten, gesammelt, anschließend entlang einer Steigungsstrecke gefördert und einer weiteren Entspannungstrocknung zugeführt wird, in der der Materialfluß der Fliehkraft und Schwerkraft ausgesetzt wird.

Die dynamische Verteilung der Feststoffteilchen bei einem dem Verteilungszustand, dem Feuchtigkeitsgrad und/oder der Fördermenge angepaßten Vakuum kann besonders einfach und wirksam dadurch erreicht werden, daß das Material durch Schütteln, Verwirbeln und/oder Materialteilchen entzerrende, insbesondere sie transportierende und/oder sie beim Transport verzögernde Flächen desagglomeriert, aufgelockert und verteilt wird. Damit kann das Material besonders günstig derart oberflächen-verteilt werden, d.h., daß auf kleinem Raum eine große wirksame Fläche erzielt ist, so daß von feinverteilten Teilchen bzw. von sehr dünnen Schichten sehr wirksam Feuchtigkeit abtrennbar und abziehbar ist.

Zur Beschleunigung des Verfahrens bzw. zur Verkürzung und Erhöhung der Wirksamkeit der Entspannungstrocknung ist es, insbesondere bei besonders wasserhaltigen Naßgütern, besonders vorteilhaft, daß das zu entwässernde Gut zu Verfahrensbeginn zunächst erwärmt und grobentwässert wird. Eine sehr günstige energiesparende und für die nachfolgende Entspannungstrocknung besonders angepaßte Grobentwässerung besteht darin, daß das Material zur Grobentwässerung auf ca. 20 - 25° C erwärmt und ein hoher Prozentsatz der Feuchtigkeit, insbesondere ca. 30 - 60 % der Flüssigkeit, abgezogen wird. Um die Grob-oder Vorentwässerung besonders wirksam, insbesondere im Hinblick auf eine kontinuierliche große Durchsatzleistung auszuführen, schlägt die Erfindung vor, daß der Fluß des zu entwässernden Guts im Bereich der Grobentwässerung vorübergehend unterbrochen und/oder in der Geschwindigkeit gedrosselt wird.

Um insbesondere bei sich ggf. ändernden Feuchtigkeitsgraden, Veränderungen in der Zusammensetzung oder in den Korngrößen der Feststoffteilchen des Beschickungsguts und/oder - damit im Zusammenhang stehend - bei ggf. variierenden Verteilungszuständen der Feststoffteilchen den Gesamtverfahrensablauf kontinuierlich, sicher und energiesparend zu gewährleisten, besteht eine Ausgestaltung der Erfindung darin, daß der Materialfluß zur Erwärmung und Grobentwässerung und/oder zu einer die Verteilung und die Abtrennung von Feuchtigkeit umfassenden Vakuum-Entspannungstrocknung mehrfach dosiert wird. Die Dosierungen lassen sich besonders wirksam und einfach dadurch ausführen, daß sämtliche oder wenigstens ein Teil der Dosierungen synchron, insbesondere in Abhängigkeit von der Fördermenge und/oder der Konsistenz des zu entwässernden Guts vorgenommen werden.

Bei einer erfindungsgemäßen Vorrichtung besteht eine besonders einfach bauende und leistungsfähige Ausführungsform darin, daß die Vakuumeinrichtung einen Kondensator, eine erste Vakuumpumpe, insbesondere eine Rootspumpe, und eine zweite nachgeschaltete Vakuumpumpe, insbesondere eine Wasserringpumpe, umfaßt.

Um die Vorrichtung besonders wirtschaftlich, energiesparend und zur besonders sicheren Aufrechterhaltung des Entspannungstrocknungsprozesses zu betreiben, ist vorgesehen, daß sie hintereinander geschaltete Entspannungstrocknungsstufen umfaßt, die jeweils mit einer eigenen Vakuumeinrichtung verbunden sind, wobei die Vakuumeinrichtungen derart ausgebildet sind, daß der Arbeitsdruck jeder in Förderrichtung nachgeschalteten Stufe kleiner als in der vorhergehenden Stufe erzeugbar ist. Eine besonders kompakt bauende, leistungsfähige und die Materialtrocknung besonders schnell durchführende Vorrichtung wird dadurch erreicht, daß sie drei Entspannungstrocknungsstufen umfaßt und daß die Verteilungseinrichtung einen der mittleren Stufe zugeordneten Förderraum mit hohem Verteilungswirkungsgrad aufweist. Damit ist die mittlere Stufe bei gleichzeitiger Feuchtigkeitsabtrennung für eine Verteilung des Feststoffmaterials mit einem im Vergleich zu den beiden anderen Entspannungstrocknungsstufen höheren Verteilungswirkungsgrad vorgesehen. Zur Verkleinerung des Raumbedarfs für die Vorrichtung, insbesondere im Hinblick auf eine mobile Anlage, und/oder zur maschinentechnisch besonders einfachen Herbeiführung eines hohen Verteilungswirkungsgrades in der zweiten Stufe, d.h. dort zur ausgeprägten Desagglomeration, Auflockerung und/oder Oberflächenverteilung der Feststoffteilchen, besteht eine vorteilhafte Ausgestaltung der erfindungsgemäßen Vorrichtung darin, daß hinter der eingangsseitigen Entspannungstrocknungsstufe ein Sammelbehälter und eine das Material von diesem zu der mittleren Entspannungstrocknungsstufe vertikal fördernde Förderstrecke vorgesehen sind und die mittlere Stufe einen langgestreckten, vertikal ausgerichteten rohrförmigen Behälter aufweist, der eine Flieh- und Schwerkraft hervorbringende, dabei mit senkrecht zur Behälterachse rotierenden Verteilungsflächen ausgestattete Wirbeleinrichtung umschließt. Durch die Fliehkraftwirkung wird der freie Fall von Teilchen verzögert, wobei ihre Raumlage ständig und dynamisch geändert wird. Ebenfalls hinsichtlich kompakter Bauform, zuverlässiger Betriebsweise und/oder für ein besonders großes Durchsatzvermögen besteht eine besonders vorteilhafte Ausgestaltung darin, daß die eingangsseitige Trocknungsstufe und die ausgangsseitige Trocknungsstufe langgestreckte rohrförmige Behälter umfassen, die sich horizontal erstrecken und in ihrem tunnelartigen Inneren zur Materialförderung und -verteilung wenigstens ein, vorzugsweise mehrere übereinander angeordnete, zueinander versetzte, in Behälterlängsrichtung gegenläufig laufende Förderbänder aufweisen. Die gegenläufige Anordnung von Förderbändern sorgt für eine besonders günstige, ausgeprägte und einfache Desagglomeration und Auflockerung bzw. (Oberflächen-)Verteilung der Feststoffteilchen.

Zur Vorbereitung der Entspannungstrocknung ist es insbesondere bei stark feuchtigkeitshaltigem Naßgut hinsichtlich großer Durchsatzmengen und einer besonders schnellen Trocknung besonders zweckmäßig, daß die Vorrichtung zwischen Beschickungseinrichtung und Entspannungstrocknungsstufe eine Erwärmungs- und Grobentwässerungseinrichtung umfaßt. Die Erwärmung, für die insbesondere eine relativ niedrige Temperatur, vorzugsweise im Bereich von 20 - 25° C, ausreicht, läßt sich besonders einfach, wirksam, schnell und energiesparend dadurch ausführen, daß die Erwärmungs- und Grobentwässerungseinrichtung zur Materialerwärmung einen in seinem Inneren Wärme abgebendes Öl führenden Schraubenförderer oder an das Fördergut Wärme übertragende Pressen umfaßt. Die Grobentwässerung erfolgt besonders zweckmäßig mittels einer Feuchtigkeit abführenden Vakuumpumpe. Die Geschwindigkeit und/oder Wirksamkeit der Vorentwässerung kann dadurch gesteigert werden, daß die Erwärmungs- und Grobentwässerungseinrichtung ausgangsseitig mit einer Drosseleinrichtung versehen ist.

Ein kontinuierlicher Verfahrensablauf kann besonders störungsfrei sowie auch im Hinblick auf einen energiesparenden und der Trocknung mit hohem Wirkungsgrad angepaßten Betrieb insbesondere dadurch erreicht werden, daß zur Einleitung des Trocknungsguts in eine Trocknungsstufe, in einen Sammelbehälter, in die Austragseinrichtung und/oder in die Erwärmungs- und Grobentwässerungseinrichtung die Materialflußmenge dosierende, das Material nur in Förderrichtung durchlassende Materialschleusen vorgesehen sind. Als Materialschleusen bzw. zur Dosierung können insbesondere aber auch Förderrohre mit geeigneten, d.h. den Materialfluß beeinflussenden und bestimmenden Durchmessern vorgesehen sein.

Zur kontinuierlichen staubtrockenen Aufbereitung von insbesondere bei der Beschickung in der Zusammensetzung und/oder im Feuchtigkeitsgehalt sich änderndem Naßgut ist es besonders zweckmäßig, daß die Vorrichtung eine mehrere Materialschleusen gemeinsam steuernde und betätigende Dosierungs-Steuereinrichtung umfaßt, wobei die Materialschleusen vorzugsweise als Zellenradförderer ausgebildet sind. Um einen besonders schnellen und zuverlässigen Abzug von Feuchtigkeit von den sich verteilenden und/oder verteilten Feststoffteilchen zu erreichen, ist vorgesehen, daß die Vorrichtung eine den Vakuumerzeugungseinrichtungen zugeordnete Steuereinrichtung umfaßt, um dem Feuchtigkeitsgrad, der Fördermenge und/oder der Materialbeschaffenheit angepaßte Arbeits- oder Betriebsdrücke in den Behältern, Kammern, Rohren od.dgl. zu erzeugen. So wird insbesondere bei sich plötzlich ändernden Betriebszuständen, aber auch im Hinblick auf einem stufenweisen Aufbau der Vorrichtung, eine stabile und kontinuierlich bleibende Trocknung herbeigeführt, insbesondere eine unerwünschte Vereisung von Feststoffteilchen und/oder eine unerwünschte Verdunstung von Feuchtigkeit vermieden.

Die dynamische Verteilung, d.h. die Desagglomeration, Auflockerung und/oder Oberflächenverteilung der Feststoffteilchen im Hinblick auf die Abtrennung und den Abzug von Feuchtigkeit kann besonders wirksam und vorteilhaft dadurch erreicht werden, daß der Behälter, die Kammer, die Rohre od.dgl. einer Entspannungstrocknungsstufe zur Desagglomeration, Auflockerung und/oder Oberflächenverteilung des Feststoffmaterials Schüttelsiebe, rotierende Walzen oder Schleuderflächen, Förderschnecken, Förderbänder, Propeller od.dgl. Desagglomerations-, Verwirbelungs- und/oder Verzögerungsaggregate umfaßt.

Eine sehr zweckmäßige und praktischen Erfordernissen besonders gerecht werdende Gestaltung der Vorrichtung besteht darin, daß die Vorrichtungsteile und/oder Aggregate mittels einer Grundgestelleinheit wie einer Plattform, eines Montagerahmens und/oder eines sie aufnehmenden und/oder tragenden Behältnisses miteinander verbunden sind. Damit ist erreicht, daß die Vorrichtung am Einsatzort schnell und einfach installierbar, z.B. in Form eines Bausatzes zusammensetzbar und/oder betreibbar ist, sie als Ganzes transportabel ist und/oder als mobile betriebsbereite Funktionseinheit zur Verfügung steht.

Im ganzen ist mit dem erfindungsgemäßen Verfahren bzw. der erfindungsgemäßen Vorrichtung zur Verfahrensdurchführung insbesondere erreicht, daß körniges Naßgut kontinuierlich, kostengünstig, in großen Mengen und schnell bis zur Staub- und Pulvertrockenheit getrocknet wird. Feststoffteilchen werden unter Vermeidung von Klumpenbildung feinstverteilt, wobei zugleich unter Beaufschlagung eines Vakuums Feuchtigkeit derart abgezogen wird, daß die Teilchen weder vereisen, noch die Flüssigkeit übermäßig verdunstet. Das anfallende Trockengut kann gefahrlos transportiert, gefahrlos und komprimiert gelagert und/oder weiterverarbeitet werden.

Weitere Ausbildungsmöglichkeiten, Zweckmäßigkeiten und Vorteile der Erfindung gehen aus der folgenden Beschreibung der in der schematischen Zeichnung dargestellten Ausführungsbeispiele hervor. Es zeigt

Fig. 1 ein Blockdiagramm einer erfindungsgemäßen Vorrichtung zur Darstellung eines erfindungsgemäßen Verfahrensablaufs,

Fig. 2 eine erfindungsgemäße Vorrichtung in Seitenansicht und

Fig. 3 eine erfindungsgemäße Vorrichtung in Draufsicht.

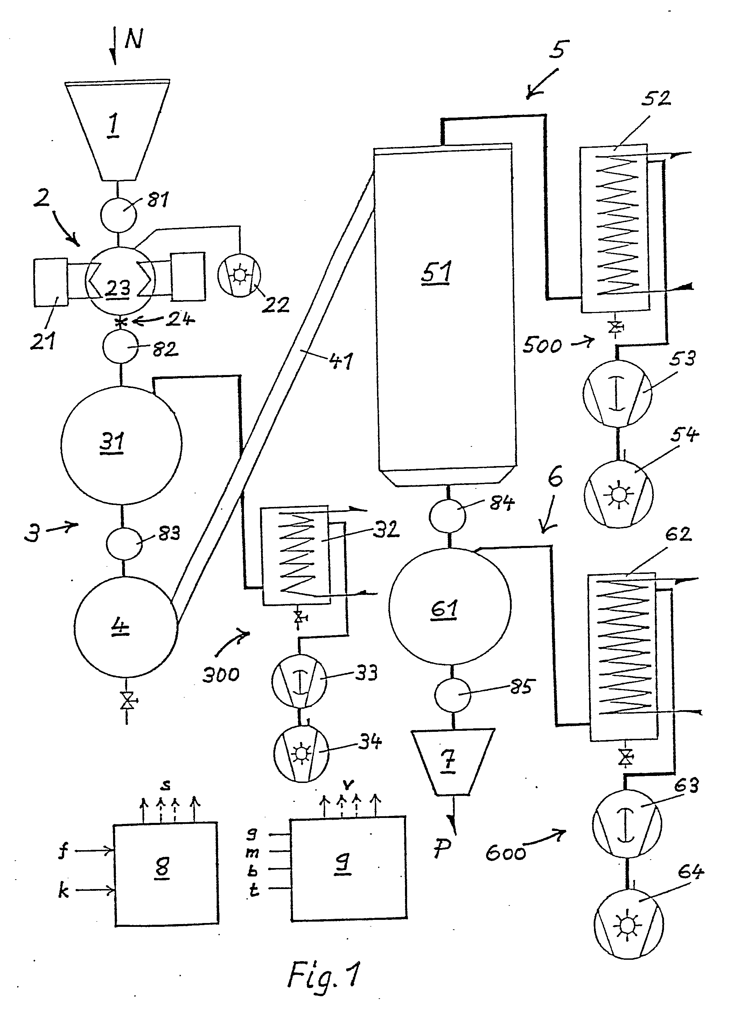

In Fig. 1 umfaßt eine erfindungsgemäße Vorrichtung drei hintereinander geschaltete Entspannungstrocknungsstufen 3, 5 und 6. Die eingangsseitige Stufe 3 ist über eine Erwärmungs- und Grobentwässerungseinrichtung 2 mit einem Trichter 1 zur Aufgabe von zu trocknendem Naßgut N verbunden. Zwischen der Stufe 3 und der mittleren Stufe 5 ist ein Sammelbehälter 4 angeordnet, der über eine Förderstrecke 41 mit der Stufe 5 in Verbindung steht. Ausgangsseitig, d.h. am Ausgang der der Stufe 5 nachge schalteten Stufe 6, ist ein Auslaß oder eine Austragseinrichtung 7 angeordnet. Jede Entspannungstrocknungsstufe 3, 5 bzw. 6 umfaßt einen Behälter 31, 51 bzw. 61 für das Fördergut sowie eine Vakuumerzeugungseinrichtung 300, 500 bzw. 600. Jede Vakuumerzeugungseinrichtung weist einen an den zugeordneten Behälter 31, 51 bzw. 61 angeschlossenen Kondensator 32, 52 bzw. 62, eine mit ihm verbundene erste Vakuumpumpe, z.B. eine Rootspumpe 33, 53 bzw. 63, sowie eine zweite nachgeschaltete Vakuumpumpe, z.B. eine Wasserringpumpe 34, 54 bzw. 64, auf. Die Vakuumerzeugungseinrichtungen und die Behälter sind so ausgelegt, daß ein großes Volumen gezogen wird.

Die Erwärmungs- und Grobentwässerungseinrichtung 2 ist mit einem Materialerhitzer 21, z.B. mit einem Öl führenden Schraubenförderer oder Wärmepressen, ausgestattet und mit einer aus einer Vakuumkammer 23 Feuchtigkeit von dem Fördergut abführenden Vakuumpumpe 22 verbunden. Am Ausgang der Einrichtung 2 ist eine Drosseleinrichtung 24 angeordnet.

Am Eingang der Erwärmungs- und Grobentwässerungseinrichtung 2, zwischen dieser und der Stufe 3, zwischen der Stufe 3 und dem Sammelbehälter 4, zwischen der Stufe 5 und der Stufe 6 sowie vor der Austragseinrichtung 7 sind die Materialflußmenge dosierende, das Material nur in Förderrichtung durchlassende Materialschleusen 81, 82, 83, 84 bzw. 85 vorgesehen. Diese Materialschleusen können insbesondere als selbstregulierende Rohr-Förderstrecken ausgeführt sein. Eine andere besondere Ausgestaltung der Erfindung besteht darin, daß Materialschleusen 81, 82, 83, 84 bzw. 85, die insbesondere als das Material nur in Förderrichtung durchlassende Zellenrad-Förderer od.dgl. ausgebildet sind, von einer sie gemeinsam und/oder synchron steuernden und betätigenden Dosierungs-Steuereinrichtung 8 gesteuert werden. Die Steuereinrichtung 8 ist derart aufgebaut, daß sie den Materialschleusen in Abhängigkeit von im Bereich der Schleusen gemessenen Werten f für die Fördermenge und/oder Meßwerten k für die Konsistenz des geförderten Guts Steuerwerte s zuführt.

Bei einer weiteren Ausführungsform der erfindungsgemäßen Vorrichtung ist eine in Fig. 1 dargestellte Vakuum-Steuereinrichtung 9 vorgesehen, die über geeignete, nicht dargestellte Stellglieder mittels Steuerwerten v in den Behältern 31, 51 bzw. 61 Arbeits- oder Betriebsdrücke herbeiführt, die jeweils infolge von im Bereich der Behälter gemessenen bzw. entsprechenden Werten g, m, b und/oder t für Feuchtigkeitsgrad, Fördermenge, Materialbeschaffenheit und/oder Temperatur des Förderguts hervorgebracht werden.

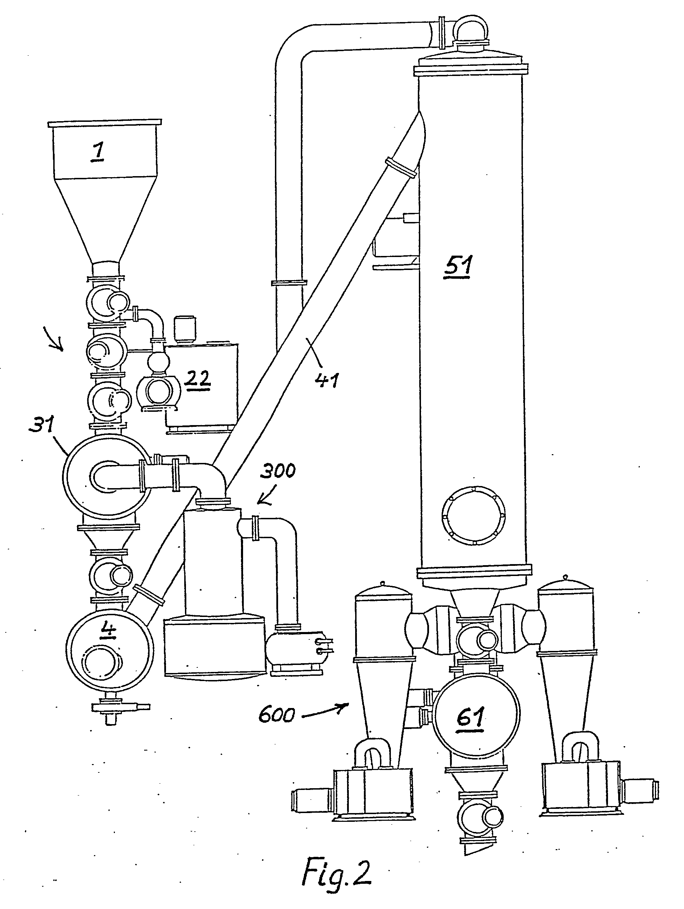

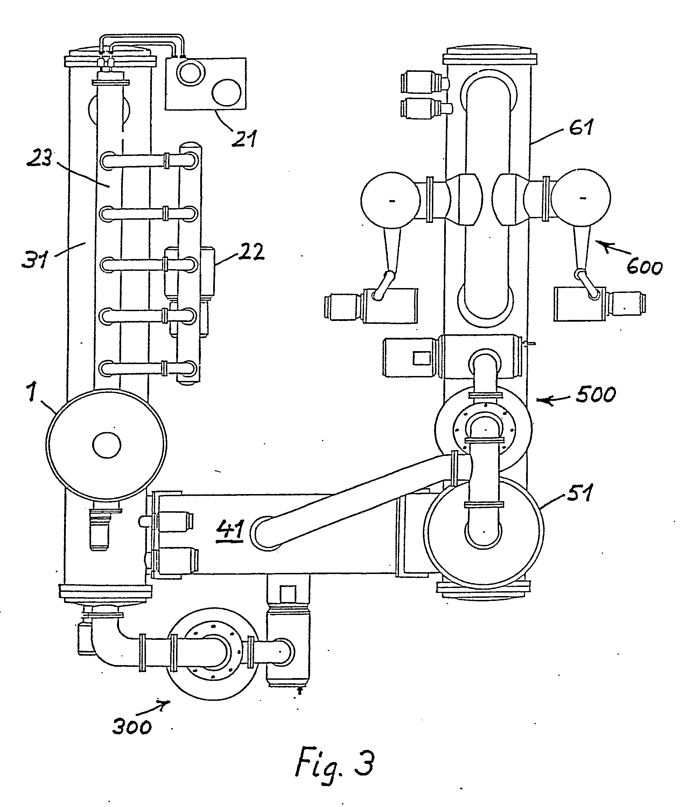

In Figuren 2 und 3, in denen der Fig. 1 entsprechende Bezugzeichen verwendet sind, erkennt man eine besondere Ausbildung, Anordnung und Verbindung von Behältern der Entspannungstrocknungsstufen. Die Behälter 31 und 61 sind als langgestreckte rohrförmige und tunnelartige Förderräume ausgebildet, die sich horizontal erstrekken und in ihrem Inneren zur Materialförderung und -verteilung wenigstens ein, vorzugsweise mehrere übereinander angeordnete, zueinander versetzte, in Behälterlängsrichtung gegenläufig laufende (nicht dargestellte) Förderbänder aufweisen. Der Behälter 51 der mittleren (zweiten) Stufe 5 ist als langgestreckter, über seine Länge vertikal ausgerichteter rohrförmiger Verteiler- und Förderraum ausgebildet, der eine Flieh- und Schwerkraft hervorbringende, mit senkrecht zur Behälterachse rotierenden Verteilungsflächen ausgestattete (nicht dargestellte) Wirbeleinrichtung umschließt. Dabei ist ein Fördersystem 41 vorgesehen, z.B. ein Schachtförderer, das das Material aus dem Sammelbehälter 4 in den oberen Bereich des Behälters 51 einbringt. Die Entspannungstrocknungsstufe 5 mit Behälter 51 ist vorgesehen, um in dieser Stufe eine besonders ausgeprägte Desagglomeration, Auflockerung sowie eine besonders große wirksame Oberfläche der Feststoffteilchen hervorzubringen, wobei diese ständig durch Verwirbelung und Schwerkrafteinwirkung entzerrt, gedreht und bewegt werden.

Ein erfindungsgemäßer Verfahrensablauf wird nun anhand der erläuterten erfindungsgemäßen Vorrichtung bzw. deren Ausgestaltungen beschrieben.

Durch den Aufgabetrichter 1 geht Naßgut N, insbesondere stark wasserhaltiger Schlamm, z.B. ein Sand/Schlick-Gemisch, Schlick od.dgl. Schüttgut durch die Materialschleuse 81 in die Erwärmungs- und Grobentwässerungseinrichtung 2. Dort wird das Material bei einer Temperatur im Bereich von 22° C erwärmt und mittels der Vakuumpumpe 22 grobentwässert. Durch die Drosseleinrichtung 23 kann der Materialfluß verzögert oder kurzfristig unterbrochen werden, um den Wärmungs-Vorentwässerungsprozeß zu beschleunigen. Diese Drosselung erfolgt so, daß eine kontinuierliche Beschickung der Vorrichtung sowie anschließend kontinuierlicher Transport und Trocknung des Förderguts nicht behindert sind. Nach Passieren der weiteren Materialschleuse 82 gelangt das Material in den Behälter 31 der ersten Entspannungstrocknungsstufe 3, in dem es desagglomeriert wird, und wo zugleich infolge der Ausbildung einer Vakuum-Entspannungstrocknung mit einem dafür vorgesehenen Arbeits- oder Betriebsdruck, insbesondere von 20 - 30 mbar, durch die Vakuumeinrichtung 300 Feuchtigkeit abgetrennt und abgezogen wird. Aus dem Behälter 31 wird das Material über die Materialschleuse 83 in den Sammelbehälter 4 geführt, von dem es weiterhin kontinuierlich über die Förderstrecke 41 in den Behälter 1 der zweiten Entspannungstrocknungsstufe 5 geführt wird. Dort erfolgt eine besonders ausgeprägte Desagglo meration, Auflockerung und Oberflächenverteilung der Feststoffteilchen, wobei diese zudem kontinuierlich gefördert werden und mittels der Vakuumeinrichtung 500 unter Ausbildung und Aufrechterhaltung einer Entspannungstrocknung, insbesondere bei einem Arbeits- und Betriebsdruck von 10 bis 20 mbar, Feuchtigkeit praktisch vollständig abgetrennt und abgezogen wird. Das Material gelangt aus dem Behälter 51 über die Materialschleuse 84 in den Behälter 61 der dritten Entspannungstrocknungsstufe 6, wo es ebenfalls desagglomeriert wird und eventuell noch vorhandene Restfeuchtigkeit unter Erzeugung und Aufrechterhaltung einer Entspannungstrocknung abgezogen und abgetrennt wird, um vollkommene Pulvertrockenheit zu erreichen. Zu diesem Zweck ist in dem Behälter 61 ein Arbeitsdruck von 5 bis 10 mbar besonders geeignet, der auf geeignete Weise mit der Vakuumeinrichtung 600 erzeugt wird. Das staubartig trockene Material P wird dann durch die Materialschleuse 85 mittels der Austragseinrichtung 7 kontinuierlich ausgetragen.

Statt eines mehrstufigen Verfahrensablaufs mit insbesondere drei Stufen kann erfindungsgemäß eine einstufige Entspannungstrocknung durchgeführt werden. Die Entspannungstrocknung nach der Erfindung zeichnet sich insbesondere dadurch aus, daß das Material kontinuierlich in Fluß gehalten bzw. gefördert wird, dabei die Feststoffteilchen stets verteilt, d.h. bewegt, entzerrt, aufgelockert und/oder oberflächenverteilt werden und die sich verteilenden und/oder verteilten Teilchen während des kontinuierlichen Fördervorgangs derart einem Vakuum ausgesetzt werden, daß Feuchtigkeit bis zur Pulvertrockenheit des Materials unter Vermeidung von Vereisung bzw. von zu schneller Verdunstung vollständig abgetrennt und abgezogen wird. Die mehrstufige serielle und/oder auch eine mehrstufige parallele Entspannungstrocknung ermöglichen auf besonders einfache Weise die Durchsatzleistung, den Wirkungsgrad des Verfahrens, eine wirtschaftliche energiesparende Betriebsweise weiter zu erhöhen und/oder eine besonders kompakt bauende, für sich transportable Vorrichtung zu schaffen. Dabei ist es vorteilhaft, serielle Verfahrensstufen zur besonders stabilen Aufrechterhaltung der Gesamtentspannungstrocknung zu betreiben, indem der den Entvakuisierungsgrad bestimmende Arbeitsdruck jeder in Förderrichtung nachgeschalteten Stufe kleiner als in der vorhergehenden erzeugt wird. Eine besondere Anpassung an ggf. sich verändernde Betriebsparameter wie Änderungen in der Konsistenz des Beschickungsmaterials, der Umgebungstemperatur, der Fördermenge und/oder der Fördergeschwindigkeit kann auf besonders zweckmäßige Weise durch eine Arbeitsdrucksteuerung in den Stufen mittels Steuerung durch die Vorrichtung 9 infolge der gemessenen Betriebsparameter hinsichtlich einer besonders zuverlässigen Aufrechterhaltung der Entspannungstrocknung erfolgen. Eine kontinuierliche und insbesondere bereits durch geeignet dimensionierte Förderrohre sich selbst dosierende Förderung kann vorteilhaft durch eine zentrale und synchrone Steuerung von Materialschleusen 81 bis 85 bewirkt bzw. unterstützt werden.

**Ansprüche**

1. Verfahren zur Entwässerung von Naßgut, insbesondere von wasserhaltigen fließ- und/oder schüttfähigen Massengütern wie Schlämmen, Fäkalien, schlammartigen Ablagerungen wie Schlick oder Schüttgütern wie Getreide, wobei das zu entwässernde Gut dosiert gefördert wird und seine Feuchtigkeit enthaltenden Feststoffteilchen zur direkten Trocknung dynamisch verteilt werden, **dadurch gekennzeichnet,**

a) daß das sich verteilende und/oder verteilte Feststoffteilchenmaterial kontinuierlich gefördert und

b) ständig mit einem dem Verteilungszustand, dem Feuchtigkeitsgrad und/oder der Fördermenge angepaßten Vakuum (Unterdruck) beaufschlagt wird, wobei

c) allein mit dem Vakuum unter Ausbildung einer Entspannungstrocknung Feuchtigkeit abgetrennt und abgezogen wird und

d) die Entspannungstrocknung bis zur Pulvertrockenheit der Feststoffteilchen aufrechterhalten wird, und

e) daß das pulvertrockene Material kontinuierlich ausgetragen wird.

2. Verfahren nach Anspruch 1, **dadurch gekennzeichnet,** daß Entspannungstrocknungen in nebeneinander geschalteten Trocknungsstufen erfolgen.

3. Verfahren nach Anspruch 1 oder 2, **dadurch gekennzeichnet,** daß die Entspannungstrocknungen in hintereinander geschalteten Trocknungsstufen erfolgen, wobei der den Entvakuisierungsgrad bestimmende Arbeitsdruck jeder in Förderrichtung nachgeschalteten Stufe kleiner als in der vorhergehenden Stufe ist.

4. Verfahren nach Anspruch 3, **dadurch gekennzeichnet,** daß Entspannungstrocknungen in drei aufeinanderfolgenden Stufen durchgeführt werden, wobei der Arbeitsdruck des Vakuums 20 - 30 mbar in der ersten Stufe, 10 - 20 mbar in der zweiten Stufe und 5 - 10 mbar in der dritten Stufe beträgt.

5. Verfahren nach Anspruch 3 oder 4, **dadurch gekennzeichnet,** daß die Verteilung in der zweiten Trocknungsstufe derart erfolgt, daß der Verteilungsgrad im Vergleich zu den Verteilungsgraden in übrigen Trocknungsstufen besonders groß ist, wobei die Teilchen ständig, insbesondere durch Verwirbelung, desagglomeriert und aufgelockert werden.

6. Verfahren nach einem der Ansprüche 3 bis 5, **da durch gekennzeichnet,** daß das Material nach wenigstens einer Entspannungstrocknung, vorzugsweise nach der ersten, gesammelt, anschließend entlang einer Steigungsstrecke gefördert und einer weiteren Entspannungstrocknung zugeführt wird, in der das Material Fliehkraft und Schwerkraft ausgesetzt wird.

7. Verfahren nach einem der Ansprüche 1 bis 6, **dadurch gekennzeichnet,** daß das Material durch Schütteln, Verwirbeln und/oder Materialteilchen entzerrende, insbesondere sie transportierende und/oder sie beim Transport verzögernde Flächen desagglomeriert, aufgelockert und verteilt wird.

8. Verfahren nach einem der Ansprüche 1 bis 7, **dadurch gekennzeichnet,** daß das zu entwässernde Gut zu Verfahrensbeginn zunächst erwärmt und grobentwässert wird.

9. Verfahren nach Anspruch 8, **dadurch gekennzeichnet,** daß das Material zur Grobentwässerung auf ca. 20 - 25° C erwärmt und ein hoher Prozentsatz der Feuchtigkeit, insbesondere ca. 30 - 60 % der Flüssigkeit, abgezogen wird.

10. Verfahren nach Anspruch 8 oder 9, **dadurch gekennzeichnet,** daß der Fluß des zu entwässernden Guts im Bereich der Grobentwässerung vorübergehend unterbrochen und/oder in der Geschwindigkeit gedrosselt wird.

11. Verfahren nach einem der Ansprüche 1 bis 10, **dadurch gekennzeichnet,** daß der Materialfluß zu einer die Verteilung und die Abtrennung von Feuchtigkeit umfassenden Vakuum-Entspannungstrocknung und/oder zur Erwärmung und Grobentwässerung dosiert wird.

12. Verfahren nach Anspruch 11, **dadurch gekennzeichnet,** daß sämtliche oder wenigstens ein Teil der Dosierungen synchron, insbesondere in Abhängigkeit von der Fördermenge und/oder der Konsistenz des zu entwässernden Guts vorgenommen werden.

13. Vorrichtung zur Durchführung des Verfahrens nach einem der Ansprüche 1 bis 12 mit einer Beschickungseinrichtung wie einem Aufgabetrichter und mit einer der Trockengutentnahme dienenden Austragseinrichtung, die über Fördereinrichtungen mit einer Feststoffteilchen des zu entwässernden Materials dynamisch entzerrenden und/oder verteilenden Verteilungseinrichtung in Verbindung stehen, **dadurch gekennzeichnet,** daß die Verteilungseinrichtung mindestens einen Behälter (31, 51, 61), eine Kammer, eine Röhre od.dgl. sowie eine Einrichtung zur Förderung des verteilten Feststoffmaterials umfaßt und daß die Verteilungs-/Fördereinrichtung mindestens eine Stufe (3, 5, 6) mit einer Vakuumeinrichtung (300, 500, 600) zur Entspannungstrocknung aufweist.

14. Vorrichtung nach Anspruch 13, **dadurch gekennzeichnet,** daß die Vakuumeinrichtung (300, 500, 600) einen Kondensator (32, 52, 62), eine erste Vakuumpumpe (33, 53, 63), insbesondere eine Rootspumpe, und eine zweite nachgeschaltete Vakuumpumpe (34, 54, 64), insbesondere eine Wasserringpumpe, umfaßt.

15. Vorrichtung nach Anspruch 13 oder 14, **dadurch gekennzeichnet,** daß sie hintereinander geschaltete Stufen (3, 5, 6) umfaßt, die jeweils mit einer eigenen Vakuumeinrichtung (300, 500, 600) verbunden sind, wobei die Vakuumeinrichtungen derart ausgebildet sind, daß der Arbeitsdruck jeder in Förderrichtung nachgeschalteten Stufe kleiner als in der vorhergehenden Stufe erzeugbar ist.

16. Vorrichtung nach Anspruch 15, **dadurch gekennzeichnet,** daß sie drei Stufen (3, 5, 6) umfaßt und daß die Verteilungseinrichtung einen der mittleren Stufe (5) zugeordneten Förderraum mit hohem Verteilungswirkungsgrad aufweist.

17. Vorrichtung nach Anspruch 16, **dadurch gekennzeichnet,** daß hinter der eingangsseitigen Entspannungstrocknungsstufe (3) ein Sammelbehälter (4) und eine das Material von diesem zu der mittleren Entspannungstrocknungsstufe (5) vertikal fördernde Förderstrecke (41) vorgesehen sind und die mittlere Stufe einen langgestreckten, vertikal ausgerichteten rohrförmigen Behälter (51) aufweist, der eine Flieh- und Schwerkraft hervorbringende, dabei mit senkrecht zur Behälterachse rotierenden Verteilungsflächen ausgestattete Wirbeleinrichtung umschließt.

18. Vorrichtung nach Anspruch 16 oder 17, **dadurch gekennzeichnet,** daß die eingangsseitige Trocknungsstufe (3) und die ausgangsseitige Trocknungsstufe (6) langgestreckte rohrförmige Behälter umfassen, die sich horizontal erstrecken und in ihrem Inneren zur Materialförderung und -verteilung wenigstens ein, vorzugsweise mehrere übereinander angeordnete, zueinander versetzte, in Behälterlängsrichtung gegenläufig laufende Förderbänder aufweisen.

19. Vorrichtung nach einem der Ansprüche 13 bis 18, **dadurch gekennzeichnet,** daß sie zwischen Beschickungseinrichtung (1) und Entspannungstrocknungsstufe (3, 5, 6) eine Erwärmungs- und Grobentwässerungseinrichtung (2) umfaßt.

20. Vorrichtung nach Anspruch 19, **dadurch gekennzeichnet,** daß die Erwärmungs- und Grobentwässerungseinrichtung (2) zur Materialerwärmung einen in seinem Inneren Wärme abgebendes Öl führenden Schraubenförderer oder an das Fördergut Wärme übertragende Pressen umfaßt.

21. Vorrichtung nach Anspruch 19 oder 20, **dadurch gekennzeichnet,** daß die Erwärmungs- und Grobentwässerungseinrichtung (2) eine Feuchtigkeit abführende Vakuumpumpe (22) umfaßt.

22. Vorrichtung nach einem der Ansprüche 19 bis 21, **dadurch gekennzeichnet,** daß die Erwärmungs- und Grobentwässerungseinrichtung ausgangsseitig mit einer Drosseleinrichtung (24) versehen ist.

23. Vorrichtung nach einem der Ansprüche 13 bis 22, **dadurch gekennzeichnet,** daß zur Einleitung des Trocknungsguts in eine Trocknungsstufe (3, 5, 6), in einen Sammelbehälter (31, 51, 61), in die Austragseinrichtung (7) und/oder in die Erwärmungs- und Grobentwässerungseinrichtung (2) die Materialflußmenge dosierende, das Material nur in Förderrichtung durchlassende Materialschleusen (81, 82, 83, 84, 85) vorgesehen sind.

24. Vorrichtung nach Anspruch 23, **dadurch gekennzeichnet,** daß sie eine mehrere Materialschleusen (81 bis 85) gemeinsam steuernde und betätigende Dosierungs-Steuereinrichtung (8) umfaßt, wobei die Materialschleusen vorzugsweise als Zellenradförderer ausgeführt sind.

25. Vorrichtung nach einem der Ansprüche 13 bis 24, **dadurch gekennzeichnet,** daß sie eine den Vakuumerzeugungseinrichtungen (300, 500, 600) zugeordnete Steuereinrichtung (9) umfaßt, um dem Feuchtigkeitsgrad, der Fördermenge und/oder der Materialbeschaffenheit angepaßte Arbeits- oder Betriebsdrücke in den Behältern, Kammern, Röhren od. dgl. zu erzeugen.

26. Vorrichtung nach einem der Ansprüche 13 bis 25, **dadurch gekennzeichnet,** daß der Behälter (31, 51, 61), die Kammer, die Röhre od. dgl. einer Entspannungstrocknungsstufe (3, 5, 6) zur Desagglomeration, Auflockerung und/oder Oberflächenverteilung des Feststoffmaterials Schüttelsiebe, rotierende Walzen, Schleuderflächen, Förderschnekken, Förderbänder und/oder Propeller od.dgl. Desagglomerations-, Verwirbelungs- und/oder Verzögerungsaggregate umfaßt.

27. Vorrichtung nach einem der Ansprüche 13 bis 26, **dadurch gekennzeichnet,** daß die Vorrichtungsteile und/oder Aggregate mittels einer Grundgestelleinheit wie einer Plattform, eines Montagerahmens und/oder eines sie aufnehmenden und/oder tragenden Behältnisses miteinander verbunden sind.

Fig.1

Fig.2

Fig. 3

Europäisches
Patentamt

**EUROPÄISCHER RECHERCHENBERICHT**

Nummer der Anmeldung

EP 88 73 0040

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | DE-A-3 629 954  (PREHM)<br>* Insgesamt *<br>--- | 1-27 | F 26 B    5/04<br>F 26 B   17/00<br>C 02 F   11/12 |
| X | GB-A-  880 183  (GLASER et al.)<br>* Insgesamt * | 1,7,11,<br>13,26 | |
| Y | | 3,5,6,<br>12,23,<br>24 | |
| A | | 4,15,16<br>,17 | |
| | --- | | |
| Y | GB-A-  479 090  (RILEY et al.)<br>* Insgesamt * | 3,5,6 | |
| A | | 1,7,13,<br>15 | |
| | --- | | |
| Y | CH-A-  283 158  (GEBR. BÜHLER)<br>* Insgesamt *<br>--- | 12,23,<br>24 | |
| Y | DE-C-  318 127  (PASSBURG)<br>* Insgesamt * | 1,2,8,<br>10,11,<br>13,19,<br>26 | **RECHERCHIERTE SACHGEBIETE (Int. Cl.4)** |
| A | | 14 | F 26 B<br>C 02 F |
| | --- | | |
| Y | US-A-2 386 052  (LUNDY)<br>* Insgesamt * | 1,2,8,<br>10,11,<br>13,19,<br>26 | |
| A | | 3,18,22 | |
| | ---                              -/- | | |

Der vorliegende Recherchenbericht wurde für alle Patentansprüche erstellt

| Recherchenort | Abschlußdatum der Recherche | Prüfer |
|---|---|---|
| DEN HAAG | 18-10-1988 | SILVIS H. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | ENVIRONMENTAL SCIENCE AND TECHNOLOGY, Band 1, Nr. 5, Mai 1967, Seiten 374-379, Easton, PA, US; F.W. MOEHLE: "Fly ash aids in sludge disposal" * Insgesamt * --- | 1,8,10, 11,13 | |
| A | DE-C- 577 601 (RECKITT & SONS, LTD) * Insgesamt * --- | 1,3,8, 13,15, 18 | |
| A | US-A-4 208 285 (SAMPLE, Jr.) * Spalte 4, Zeile 49 - Spalte 5, Zeile 3; Figuren 2,3 * --- | 20 | |
| A | BE-A- 506 512 (MAZZONI) --- | | |
| A | DE-A-2 048 494 (LEYBOLD-HERAEUS) --- | | |
| A | FR-E- 49 539 (DIENST) --- | | |
| A | CH-A- 185 218 (DIENST) ----- | | RECHERCHIERTE SACHGEBIETE (Int. Cl.4) |

Der vorliegende Recherchenbericht wurde für alle Patentansprüche erstellt

| Recherchenort | Abschlußdatum der Recherche | Prüfer |
|---|---|---|
| DEN HAAG | 18-10-1988 | SILVIS H. |

EPO FORM 1503 03.82 (P0403)